# EUROPÄISCHE PATENTSCHRIFT

(11) **EP 0 874 718 B1**
(45) Veröffentlichungstag und Bekanntmachung des Hinweises auf die Patenterteilung: **28.08.2002**
(21) Anmeldenummer: 96934498.5
(22) Anmeldetag: 30.09.1996
(51) Int. Cl.: B27K 5/00

(54) **Verwendung eines Mittels zum Schutz von technischen Materialien vor Schädigung und Zerstörung durch Schadorganismen auf Basis natürlicher Wirkstoffe**
USE OF AN AGENT BASED ON NATURAL ACTIVE SUBSTANCES FOR PROTECTING TECHNICAL MATERIALS AGAINST DAMAGES AND DESTRUCTION BY HARMFUL ORGANISMS
UTILISATION D'UN AGENT A BASE DE SUBSTANCES ACTIVES NATURELLES POUR LA PROTECTION DE MATERIAUX TECHNIQUES CONTRE TOUT DOMMAGE ET TOUTE DESTRUCTION PROVOQUES PAR DES ORGANISMES NUISIBLES

(30) Priorität: 29.09.1995 DE 19536328
(43) Veröffentlichungstag der Anmeldung: 04.11.1998
(73) Patentinhaber: Remmers Bauchemie GmbH, 49624 Löningen (DE)
(72) Erfinder: POPPEN, Heinrich, D-49624 Löningen (DE); PALLASKE, Michael, D-49624 Löningen (DE); HÄFNER, Barbara, D-10243 Berlin (DE); KREBS, Birgit, D-13156 Berlin (DE); OCKARDT, Andrea, D-13057 Berlin (DE); SCHEITHAUER, Margot, 01324 Dresden (DE)
(74) Vertreter: Herrmann-Trentepohl, Werner, Dipl.-Ing.
(86) Internationale Anmeldenummer: EP9604271
(87) Internationale Veröffentlichungsnummer: WO97012737

(56) Entgegenhaltungen:
- DD-A- 264 940
- DD-A- 267 420
- GB-A- 2 219 296
- MATER ORGANISMEN, Bd. 5, Nr. 4, 1970, BERLIN, Seiten 265-279, XP002024486 H.GREAVES: "the effect of selected bacteria and actinomycetes on the decay capacity of some wood-rotting fungi"
- WOOD FIBER PROD. , Bd. 25, Nr. 1, 1993, OREGON STATE UNIV. CORVALLIS U.S.A., Seite 23-24 XP002024487 KREBER ET AL.: "ability of selected bacterial and fungal bioprotectants to limit fungal stain in ponderosa pine sapwood"

## Beschreibung

Die Erfindung betrifft die Verwendung eines Mittels zum Schutz von technischen Materialien aus Holz und von Holzwerkstoffen das insbesondere für die Imprägnierung von Holz gegen Schadorganismenbefall geeignet ist. Das Mittel enthält übliche Trägerstoffe und Hilfsmittel und ist sowohl für die prophylaktische Anwendung als auch für die Behandlung eines bestehenden Befalls geeignet.

Zum Schutz von Holz, aber auch von Kunststoffen, vor Zerstörung und Qualitätsminderung durch Befall mit Schadorganismen, insbesondere durch Pilz- und Insektenbefall, werden in großem Umfang chemische Mittel mit biozider Wirkung gegen den jeweiligen Schadorganismus eingesetzt. Die bisher verwendeten Präparate haben sich im Grunde genommen bewährt, treffen aber hinsichtlich ihrer Umweltverträglichkeit auf Bedenken. Eine Reihe dieser Mittel sind auch toxikologisch nicht unbedenklich und können bei empfindlichen Personen Reizzustände und Allergien auslösen. Bei einigen dieser bekannten Mittel wurden deshalb bereits Anwendungsverbote erlassen.

In dieser Situation besteht eine erhöhte Akzeptanz für biologische oder biogene Holzschutzmittel. Allerdings können die bisher unter dem Begriff "biologische Holzschutzmittel" angebotenen Substanzen, die beispielsweise Balsamterpentinöl und Holzessig enthalten, die an Holzschutzmittel gestellten Anforderungen nicht immer erfüllen. Insbesondere gegen tiefreichenden Holzbockbefall ist es nach wie vor notwendig, hochaktive chemische Mittel einzusetzen. Aus der Landwirtschaft ist die Verwendung von Insektenhormonen zur Bekämpfung eines Insektenbefalls seit langem bekannt. Insbesondere werden hier Analoga und Mimetika von Häutungs- und Verpuppungshormonen eingesetzt, also Insekten-Juvenilhormoneanaloga und Ecdyson-Mimetika. Ein Nachteil dieser Mittel ist allerdings ihre Wirkungsbreite, die auch zur Vernichtung von Nutzinsekten führt, und die teilweise recht geringe Wirkungsdauer, wenn eine Langzeitwirkung erwünscht ist. Von Vorteil ist allerdings ihrer außerordentlich geringe Wirkkonzentration.

Im Holzschutz wurden diese Mittel bislang nicht eingesetzt. Die Gründe hierfür sind im einzelnen nicht bekannt, jedoch dürften die in der Landwirtschaft gesammelten Erfahrungen bezüglich der Wirkungsdauer, baurechtliche Vorschriften und auch Applikationsprobleme dafür verantwortlich sein.

Die fungizide Wirkung von Bakterien, Cysten und Sporen von Bakterien sowie Bakterienextrakten ist seit langem bekannt. So wurde bereits 1923 nachgewiesen, daß Sparassis ramosa das Wachstum des Hausschwammes unterdrücken kann.

Aus DE-B 17 67 982 ist ein Holzschutzmittel bekannt, dessen bakterizide Wirkung auf der Verwendung von Sporen Cellulose nicht abbauender Pilze beruht und deren fungizid wirkende Substanzgruppe aus anorganischen Salzen bestimmter Elemente, insbesondere Kombinationen von Fluor, Bor und Chrom, Fluor, Arsen und Chrom sowie Arsen, Kupfer und Chrom besteht. Die bakterizide Wirkung dieser Kombinationspräparate soll durch die Verwendung von z. B. Fusarium solani, Trichoderma viride, Aspergillus flavus, Aspergillus fumigatus gegen celluloseabbauende Bakterien erreicht werden.

Antagonistische Wirkprinzipien gegen pilzliche Holzschädlinge sind ferner aus GB-A-2 239 800 bekannt, wonach Vertreter von Trichoderma und Hyalodenron das Wachstum von Hausschwamm hemmen können.

Eine Applikation von lebensfähigen Pilzkulturen bzw. Pilzsporen in Form eines Präparates für den Holzschutz verbietet sich aber aus medizinisch/hygienischer Sicht, da Pilzsporen bereits in niedrigen Dosen allergieauslösend wirken können.

In "forum mikrobiologie", 3/90, S. 156 - 163 sind gegen Pilze wirksame Antibiotika der Bacillus subtilis-Gruppe beschrieben. Insektenpatogene Spezies von Bacillus werden erwähnt.

Aus der GB 2 219 296 sind antifungale Substanzen bekannt, die aus der Fermentationsbrühe des Streptomyces Hygroscopicus MA5000 isoliert werden. In Material und Organismen, Band 5, Nr. 4 (1970), Seiten 265 bis 279 wird die Wirkung ausgewählter Bakterien und Aktinomyceten auf einige holzzerstörende Pilze offenbart. Verwendet wurden u. a. nicht näher spezifizierte Stämme der Bacillus subtilis, Streptomyces violacioniger sowie Streptomyces griseus.

In Wood Fibre Science, Band 25, Nr. (1993), Seiten 23 bis 24 wurde die Wirksamkeit von mehreren Bakterienstämmen gegen holzschädigende Pilze untersucht. Verwendet wurden u. a. die Bacillus subtilis-Stämme Nr. 733 und Q4000HB.

In den DD 250 456 A1 und DD 264 940 A1 wird die Verwendung von Sporen-Zell-Suspensionen verschiedener Streptomyces-Stämme, nämlich Varianten von S. graminofaciens, S. flavescens, S. murinus und S. spec. G43, sowie von Bacillus subtilis T99 zur Bekämpfung von Bodenpilzen in der gärtnerischen Zierpflanzen- und Gemüseproduktion beschrieben.

Aufgabe der Erfindung ist es, ein biologische/biogenes Mittel zum Schutz von technischen Materialien vor Schädigung und Zerstörung durch Befall mit Schadorganismen bereitzustellen, das einen effektiven Schutz gewährleistet und insbesondere die bekannten biologischen Holzschutzmittel in ihrer Leistungsfähigkeit übertrifft.

Dieser Aufgabe wird durch die Verwendung eines Mittels der eingangs genannten Art zum Schutz von technischen Materialien aus Holz und von Holzwerkstoffen vor Schädigung erreicht, das als Wirkstoffe Bakterien, Cysten oder Sporen von Bakterien und/oder Stoffwechsel-produkte von Bakterien oder Kombinationen derselben enthält.

Das erfindungsgemäß verwendete Mittel ist insbesondere gegen pilzliche Schadorganismen wirksam, kann aber auch zur Bekämpfung von Bakterien oder Insekten als Schadorganismen eingesetzt werden.

Die in der erfindungsgemäßen verwendung zum Einsatz kommenden biologischen bzw. biogenen Komponenten, die insbesondere gegen pilzliche Holzschädlinge wirksam sind, sind zum einen die aktiven Bakterien selbst, aber auch diese Bakterien in inaktiven Formen, beispielsweise in Form von Cysten oder Sporen. Zum Einsatz kommen können ferner die aktiven Wirkprinzipien dieser Bakterien in Form von Stoffwechselend- und/oder -zwischenprodukten. Im Sinne der Erfindung werden die aktiven und inaktiven Formen der Bakterien als biologische Wirkkomponenten und ihre Stoffwechselprodukte als biogene Wirkkomponenten bezeichnet.

Neben den vorgenannten Wirkstoffen enthalten die erfindungsgemäß verwendenen Mittel in der Regel noch ein Trägermaterial sowie übliche Zusatzstoffe, die die Formulierung stabilisieren und geeignet sind, diese in applizierbarem Zustand zu halten oder dahin zu bringen.

In der erfindungsgemäßen verwendung können die biologischen und biogenen Wirkstoffe für sich alleine oder auch als beliebiges Gemisch, ggf. unter Zusatz anderer biologisch aktiver Substanzen zur Erweiterung des Wirkungsspektrums eingesetzt werden. Bevorzugt ist aber der Einsatz von Sporen und/oder Stoffwechselprodukten der Bakterien, wobei die Stoffwechselprodukte in Form von Extrakten aus Fermentationsbrühen vorliegen können.

Die in der erfindungsgemäßen verwendung zum Einsatz kommenden Wirkstoffe bzw. Wirkprinzipien sind Bakterien, deren inaktive Formen oder deren Stoffwechselprodukte mit fungizider, antibakterieller oder insektizider Wirkung. Durch geeignete Kombinationen der Wirkungsspektren verschiedener Bakterien kann, so erwünscht, ein umfassender gleichzeitiger Schutz gegen Pilz-, Bakterien- und Insektenbefall gewährleistet werden.

Als besonders geeignet haben sich Vertreter von Bacillus spp. und Streptomyceten erwiesen. Als bevorzugte Vertreter seien genannt Bacillus subtilis, insbesondere Bacillus subtilis DSM 10272, hinterlegt unter den Bedingungen des Budapester Vertrags am 19. September 1995; Streptomyces sp., insbesondere Streptomyces graminofaciens, Streptomyces flavescens und Streptomyces murinus sowie Streptomyces avermitillis und Bacillus thuringiensis, insbesondere Bacillus thuringiensis var. israeliensis. Sehr gute Ergebnisse wurden mit Streptomyces sp. DSM 7922, Streptomyces flavescens DSM 8056, Streptomyces graminofaciens DSM 8055 und Streptomyces murinus DSM 8057 erzielt. Ganz besonders bevorzugt ist Bacillus subtilis DSM 10272 in aktiver und inaktiver Form bzw. in Form seiner Stoffwechselprodukte.

In Abhängigkeit von dem Verwendungszweck können die Bakterien und deren Dauerstadien (Cysten und Sporen) und deren Stoffwechselend- oder -zwischenprodukte, die antagonistische Wirkung gegen Schadorganismen besitzen, in beliebiger Weise und in beliebigen Mischungsverhält nissen miteinander kombiniert werden. Dabei kann durch die Verwendung der aktiven Formen und der Stoffwechselprodukte ein unmittelbarer Schutz erzielt werden, durch die Verwendung der Dauerformen ein lang andauernder Schutz, der erst unter geeigneten Umweltbedingungen aktiviert wird.

Bei den Dauerformen der Bakterien handelt es sich um weitestgehend dehydratisierte Zellsubstanz, die mit einer sehr widerstandsfähigen Hülle umgeben ist. Diese Dauerstadien sind extrem widerstandsfähig gegen abiotische Einflüsse, wie Temperatur, Druck und Strahlung, aber auch gegen chemische Einflüsse. Mit diesen Eigenschaften eignen sie sich für nahezu alle Applikationsverfahren für Holzschutzmittel, wie Streichen, Tauchen und Druck-Vakuum-Verfahren.

In der Dauerform kann der Mikroorganismus lange Zeit im Zustand latenten Lebens überdauern - für einige Bacillus-Arten wurden 100 bis 150 Jahre nachgewiesen. Diese Dauerformen werden erst bei ausreichender Umgebungsfeuchte wieder aktiv. Da bei einem Pilzbefall immer ausreichend Feuchte vorhanden ist, treffen Schadbefall und Freisetzung der Wirksubstanzen durch Aktivierung der Dauerformen immer zusammen.

Es ist anzunehmen, daß das antagonistische Prinzip vorzugsweise auf biogenen Proteinen basiert, die von den Bakterien synthetisiert und sekretiert werden. Diese normalerweise relativ kurzkettigen Polypeptide zeichnen sich durch eine hohe Stabilität aus. Sie verbinden in der Regel eine hohe selektive Wirksamkeit mit - unter richtigen Bedingungen - guter biologischer Abbaubarkeit, so daß bei der Entsorgung behandelter Hölzer Vorteile gegenüber den bislang eingesetzten Bioziden bestehen.
Für den Einsatz im Holzschutz können Wirksamkeitslücken des erfindungsgemäßen Mittels durch geeignete Fungizide oder Insektizide geschlossen werden.

Fungizide Wirksamkeitslücken können durch Zugabe von Triazolfungiziden wie
Propiconazole: 1-(2,4-Dichlorphenyl)-4-propyl-1,3-dioxolan-2-yl)-methyl)1H-1,2,4-triazol;
Tebuconazole: alpha-[2-(4-Chlorphenyl)ethyl]-alpha(1,1-dimethylethyl)-1H-1,2,4-triazol-1-ethanol; Azaconazole: 1-[2,4-Dichlorphenyl)-1,3-dioxolan-2-ylmethyl]-1H-1,2,4-triazol;
Fenbuconazole: (RS)-4-(4-Chlorphenyl)-2-phenyl-2-(1H-1,2,4-triazol-1-yl-methyl)butyronitril;
Myclobutanil: alpha-Butyl-alpha-(4-chlorphenyl)-1-1,2,4-triazol-1-propennitril;
Triadimenol: 1-(4-Chlorphenoxy)-3,3-dimethyl-1-(1H-1,2,4-triazol-1-yl-methyl)-butan-2-ol behoben werden.

Diese Triazol-Fungizide sind allein oder in beliebiger Kombination, zweckmäßigerweise in einer Menge von 0,15 bis 1,5 Gew.%, vorzugsweise von 0,4 bis 0,8 Gew.%, bezogen auf die gesamte Formulierung, zugegen.

In Frage kommen ferner auch Nicht-Triazol-Fungizide, wie sie üblicherweise im Holzschutzmittel eingesetzt werden, wobei die gleichen Konzentrationen im Holzschutzmittel eingesetzt werden, wie für die Triazol-Fungizide erwähnt. Zu nennen wäre hier beispielsweise:
Nuarimol: alpha-(2-Chlorphenyl)-alpha-(4-fluorphenyl)-5-pyrimidinmethanol;
Fenarimol: alpha-(2-Chlorphenyl)-alpha-(4-chlorphenyl)-5-pyrimidinmethanol;
IPBC: 3-Jodpropargyl-N-butylcarbamat;
Tolylfluanid: N'-Dichlorfluormethylthio-N,N-dimethyl-N'-tolylsulfamid;
Dichlorfluanid: N'-Dichlorfluormethylthio-N,N-dimethyl-N'-phenylsulfamid;
TIAA: 2,3-3-Triiodallylalkohol, jeweils für sich oder in beliebiger Mischung derselben.

Weiterhin können in diesem Zusammenhang als Nicht-Triazol-Fungizide genannt werden
Xyligen Al: Tris(N-cyclohexyldiazeniumdioxy) aluminium;
Cu-HDO: N-Nitroso-N-cyclohexyl-hydroxylamin-Kupfer;
quaternäre Ammoniumverbindungen;
Betaine;
polychlorierte Kohlenwasserstoffe (PCP usw.);
Borverbindungen (Borsäure, Borax, usw.);
bei denen die Konzentration in der Formulierung etwa 01, bis 10 Gew.%, vorzugsweise 0,5 bis 5 Gew.% beträgt und die jeweils für sich oder als Mischung von zwei oder mehr Komponenten eingesetzt werden können.

Darüberhinaus können üblicherweise im Holzschutz verwandte Borverbindungen zugegen sein, beispielsweise Borsäure oder Borax, wie auch quaternäre Ammoniumverbindungen, etwa Trimethyldecylammoniumchlorid, in Mengen von 1 bis 50 Gew.%, vorzugsweise 5 bis 25 Gew.%, bezogen auf die gesamte Formulierung.

Eine insektizide Komponente der erfindungsgemäß verwendeten Mittel beruht zweckmäßigerweise ebenfalls auf bakterieller Aktivität. Auch hier können die aktiven Formen der Bakterien, deren Dauerstadien und deren Stoffwechselprodukte, je nach Anwendungszweck in beliebiger Kombination und zweckmäßigem Mischungsverhältnis eingesetzt werden. Als Wirkstoffe sind bekannt bei Streptomyces avermitillis Avermectin, Abamectin und Ivermectin, bei Bacillus thuringiensis var. israelensis BT-Toxin. Es versteht sich, daß diese insektiziden Wirkprinzipien in beliebiger Kombination mit fungiziden oder bakteriziden Wirkprinzipien eingesetzt werden können.

Insekizide Wirksamkeitslücken können durch Zugabe von Insektenhormonen, wie auch deren Mimetika und Analoga behoben werden. Geeignete Juvenilhormon-Analoga sind
Pyriproxyfen: 4-Phenoxyphenyl-(RS)-2-(2-pyridyloxy)propylether;
Fenoxycarb: Ethyl[2-(4-phenoxyphenoxy)ethyl]carbamat; Kinopren: 2-Propynyl-(E)-3,7,11-trimethyl-2,4-dodecadienoat;
Methopren: Isopropyl-(2E,4E)-11-methoxy-3,7,11-trimethyl-2,4-dodecadienoat;
Hydropren: Ethyl-(E,E)-(R,S)-3,7,11-trimethyldodeca-2,4-dienoat;
Tebufenozid: N-tert.-Butyl-N'-(4-ethylbenzoyl)propylether;
RH-0345: (käferspezifische Variante des Tebufenozid); RH-5849: (leicht käferspezifische Variante des Tebufenozid);
Azadirachtin bzw. Azadirachtanin.

Dabei ist darauf zu achten, daß jedes der Hormone oder seine Analoga oder Mimetika in einer die Wirkung garantierenden Menge, also im Bereich von 0,00005 bis 0,5 Gew.%, bezogen auf die gesamte Formulierung, vorliegt. Vorzugsweise beträgt die Konzentration eines jeden Hormons oder Wirkstoffes in der Formulierung 0,001 bis 0,05 Gew.%. Es kann nur einer dieser Wirkstoffe eingesetzt werden oder aber auch mehrere nebeneinander.

In Frage kommen ferner auch konventionelle Insektizide mit neurotoxischem Wirkprinzip und/oder Chitinsyntheseinhibitoren, wie sie üblicherweise im Holzschutz eingesetzt werden:
Organochlor-Insektizide, wie DDT, Aldrin, Dieldrin, gamma-HCH, Endosulfan;
Carbamate, wie beispielsweise Methomyl, Pirimicarb, Propoxur, Bendiocarb, Aldicarb;
Posphorsäureester, wie beispielsweise Dichlorphos, Phoxim, Chlorpyriphos, Parathion, Fenitrothion, Trichlorphon;
synthetische Pyrethoide, wie beispielsweise Permethrin, Deltamethrin, Cypermethrin, Alphamethrin, Cyfluthrin;
Benzoylharnstoffderivate, wie beispielsweise Flufenoxuron, Diflubenzuron, Hexaflumuron, Teflubenzuron; Organosiliziumverbindungen, wie beispielsweise Silafluofen.

Jeder dieser Wirkstoffe hat in einer die Wirkung garantierenden Menge, also im Bereich von 0,005 bis 1,0 Gew.%, bezogen auf die gesamte Formulierung, vorzuliegen. Vorzugsweise beträgt die Konzentration eines jeden Wirkstoffs in der Formulierung 0,001 bis 0,5 Gew.%. Es versteht sich, daß je nach Einsatzzweck mehrere Wirkstoffgruppen nebeneinander vertreten sein können.

Darüberhinaus enthalten die erfindungsgemäß verwendeten Mittel neben der Wirkkomponente mindestens einen Trägerstoff in fester oder flüssiger Form, beispielsweise ein Verdünnungs- oder Lösungsmittel. Bindemittel können ebenfalls zugegen sein, sowie übliche weitere Zusätze. Der Wirkstoff ist in einer Menge von 0,01 bis 99,5 Gew.% zugegen, vorzugsweise in einer Menge von 0,05 bis 20 Gew.%. Dazu sei angemerkt, daß Abmischungen auf Basis der bakteriellen Dauerstadien naturgemäß mit sehr geringen Anteilen an Wirkstoff auskommen und Aktivität entfalten können. So werden fungizide Effekte mit Suspensionen von 10⁶ bs 10¹⁰ Sporen von Bacillus subtilis DSM 10272 pro ml Wasser oder mit 0,5 bis 10 mg Extrakt einer Kulturbrühe pro ml Wasser erzielt.

Weitere, an sich bekannte Bestandteile der erfindungsgemäß verwendeten Mittel können beispielsweise Bindemittel, Fixiermittel, Weichmacher, Emulgiermittel, Netzmittel, Lösungsvermittler sowie die Verarbeitung fördernde Mittel sein. Zusatzmittel verschiedenster Art, wie Pigmente, Farbstoffe, Korrosionsschutzmittel, Geruchskorrigentien, pH-Regulierer, UV-Stabilisatoren können ebenfalls zugegen sein, sowie die bereits vorher erwähnten synthetischen Fungizide, Bakterizide und/oder Insektizide.

Die erfindungsgemäß verwendeten Mittel können als Konzentrate und als gebrauchsfertige Abmischungen vorliegen. Geeignete Formulierungen für Anstrichmittel, Tränkmittel, Spritzmittel sowie Mittel für die Druckimprägnierung weiß der Fachmann zu formulieren. Die Applikation erfolgt durch übliche Maßnahmen, wie Streichen, Sprühen, Spritzen oder Imprägnieren. Als Imprägnierverfahren sind Tränk-, Tauch-, Druck-, Vakuum- oder Doppelvakuumverfahren einsetzbar.

Soweit in der erfindungsgemäßen verwendung biogene Komponenten zum Einsatz kommen, müssen diese nicht isoliert werden, sondern können als angereicherte Extrakte aus Kulturlösungen, Kulturfiltraten oder Kulturkonzentraten eingesetzt werden. Diese biogenen Komponenten werden bevorzugt zur Behandlung von bereits befallenen Materialien, insbesondere von Holz oder Holzwerkstoffen, eingesetzt.

Im folgenden werden die erfindungsgemäß verwendeten Mittel anhand der einzelnen für die Formulierung notwendigen Zusatzstoffe näher erläutert.

Als Lösungsmittel können polare oder unpolare organische Lösungsmittel, Wasser oder Mischungen der Vorgenannten eingesetzt werden, je nach Einsatzzweck und Wirkstoff bzw. Wirkstoffabmischung. Die Verwendung von wässrigen oder wässrig-organischen Lösungen oder Suspensionen für erfindungsgemäße Zwecke ist bevorzugt. Zur Erhöhung oder Verbesserung der Löslichkeit der Wirkstoffe im flüssigen Träger kann es zweckmäßig sein, Emulgatoren oder Lösungsvermittler zuzusetzen.

Als polare organische Lösungsmittel werden bevorzugt solche eingesetzt, die Hydroxy-, Ether-, Keto- oder Estergruppen enthalten. Insbesondere geeignet sind Alkohole, Glykole, Glykolether, Diacetonalkohol, wasserunlösliche Polyole und deren Ester.

Als unpolare Lösungsmittel können aliphatische oder aromatische Kohlenwasserstoffe verwandt werden.

Insbesondere werden schwerflüchtige wasserunlösliche ölige oder ölartige Lösungsmittel mit einer Verdunstungszahl über 35 und einem Flammpunkt oberhalb 30°C, vorzugsweise oberhalb 45°C, eingesetzt. Als derartige Lösungsmittel können entsprechende Mineralöle oder deren Aromatenfraktionen oder mineralölhaltige Lösungsmittelgemische, vorzugsweise Testbenzin, Spindelöl, Petroleum, Terpentinöl, Terpenkohlenwasserstoffe, aromatenfreie Petroleumfraktionen oder Alkylbenzole verwandt werden.

Als organisch-chemische Bindemittel werden im Rahmen der vorliegenden Erfindung in den vorgenannten organischen Lösungsmitteln lösliche oder dispergierbare oder emulgierbare Kunstharze oder bindende trocknende Öle eingesetzt, insbesondere Bindemittl, die aus Acrylatharz, einem Vinylharz, z. B. Polyvinylacetat, einem Polyesterharz, Polykondensations- oder Polyadditionsharz, Polyurethanharz, Alkydharz, Siliconharz, trocknenden pflanzlichen oder synthetischen Ölen oder physikalisch trocknenden Bindemitteln auf Basis eines Natur- oder Kunstharzes bestehen oder diese enthalten.

Als Bindemittel werden insbesondere Kunstharze in Form einer Emulsion, Dispersion oder Lösung, vorzugsweise Alkydharze bzw. modifizierte Alkydharze oder Phenolharze, wie auch Kohlenwasserstoffharze, vorzugsweise Inden-Cumaronharze verwandt. Als Bindemittel können aber auch Bitumen oder bituminöse Substanzen bis zu 15 Gew.% eingesetzt werden.

Alternativ zum Bindemittel oder ergänzend dazu können Fixierungsmittel und/oder Weichmacher eingesetzt werden.

Als Emulgiermittel können anionische oder kationische Emulgatoren wie auch Emulgatorgemische eingesetzt werden. Als Beispiele seien Alkyl-, Aryl- und Alkylarylsulfonate sowie Phosphorsäurepartialester genannt, ferner quarternäre Ammoniumverbindungen.

Vorzugsweise werden aber nichtionische Emulgatoren allein oder im Gemisch eingesetzt, beispielsweise Alkylpolyglykolether oder -ester oder Alkylarylpolyglykolether oder -ester, Alkylphenolpolyglykolether, Polyoxyethylenderivate, Carbonsäurepolyethylenglykolester, Alkylolamide, eine Seitengruppe enthaltende ethoxylierte Phenole, insbesondere ethoxyliertes Nonylphenol, oder ethoxylierte Fettsäuren, wie auch Fettsäureester von Polyhydroxyverbindungen, insbesondere Mono- und Difettsäureester von Glycerin, Polyglycerin oder Glycerinpolyethylen- oder -polypropylenglykolethern.

Die Emulgatoren können mit Netzmitteln kombiniert werden, beispielsweise solchen auf Basis organischer Phosphoraminverbindungen.

Insbesondere zur Herstellung von Emulsionskonzentraten oder wasserhaltigen Holzschutzmitteln werden polare organische Lösungsmittel eingesetzt, vorzugsweise solche mit Hydroxyl-, Ether- oder Ketogruppen. Im Zusammenhang wird auf Ethylen- und Propylenglykol, deren Oligomere sowie die Monoalkylether derselben hingewiesen, insbesondere auf Ethylenglykol, Diethylenglykol, Ethylglykol, Butylglykol, Ethyldiglykol. Weiterhin ist Diacetonalkohol besonders geeignet.

Als Lösungsvermittler können auch anionenaktive oder kationenaktive, vorzugsweise jedoch nichtionische Tenside verwandt werden, welche die Wirkstoffe in Wasser in eine stabile Emulsion überführen können. Als Beispiele für anionische Tenside seien Alkyl-, Aryl- und Alkylarylsulfonate genannt, für kationische Tenside quarternäre Ammoniumverbindungen. Beispiele nicht ionischer Tenside sind Alkylpolyglykolether oder -ester und Alkylarylpolyglykolether oder -ester, Polyoxyethylenderivate, ethoxiliertes Nonylphenol, Fettsäureester von Polyhydroxyverbindungen, wie insbesondere Mono- und Difettsäureester von Glycerin, Polyglycerin oder Glycerinpolyethylen- oder -polypropylenglykolethern zu nennen.

Die erfindungsgemäß verwendeten Mittel können zusätzlich ansich bekannte Farbstoffe, Pigmente, wasserabweisende Mittel, Geruchskorrigentien und Inhibitoren bzw. Korrosionsschutzmittel und dergleichen enthalten. Als weiterer Zusatz kann in dem erfindungsgemäßen Mittel ein Aminoalkohol zur pH-Wertregulierung und/oder als Coemulgator enthalten sein, insbesondere Mono- oder Diethanolamin.

Für bestimmte Rezepturen kann es zweckmäßig sein, Antischaummittel, wie Siliconentschäumer oder Alkylphosphate, vorzugsweise n-Butylphosphat, zuzusetzen.

Weiterhin können andere Zusatzmittel, wie beispielsweise UV-Stabilisatoren, Verdickungsmittel, sowie Sikkative zugefügt werden. Als Sikkative, die vorzugsweise in Kombination mit einem Bindemittel auf Basis eines pflanzlichen Öles verwandt werden, gelangen vorzugsweise Kobalt-, Zink-, Cer- und/oder Manganoctoat und/oder -naphthenat zur Verwendung.

Als Rückverdünnungsmittel zur Herstellung von anwendungsfertigen Mitteln aus Konzentraten werden die vorgenannten Verdünnungsmittel oder Verdünnungsmittelgemische, ggf. in Kombination mit Bindemitteln, Zusatzstoffen, Verarbeitungshilfsmitteln, Farbstoffen, Farbpigmenten, UV-Stabilisatoren, Korrosionsinhibitoren und dergleichen eingesetzt.

Zusätzlich können die erfindungsgemäß verwendeten Holzschutzmittel ein Stabilisierungsmittel oder Stabilisierungsmittelgemisch auf Basis eines Aryl-, Alkyl- oder Arylakyl-Gruppen tragenden Phenols, eines Bisphenols oder Bisphenolderivats, eines Bis-hydroxyarylalkans oder Bis-hydroxyarlyalkanderivates, eines Polyoxypolyphenylalkans und/oder mindestens eines Phosphatids enthalten.

Mit Hilfe des Stabilisierungsmittels werden die Wirkstoffe chemisch oder physikalisch stabil in dem Holzschutzmittel gehalten, selbst wenn der Anteil an aliphatischen Kohlenwasserstoffen sehr hoch ist.

Die erfindungsgemäß verwendeten Holzschutzmittel können in Form eines Konzentrates oder als anwendungsfertiges Mittel, beispielsweise als Anstrichmittel in Form einer Lasur, insbesondere einer Farblasur, oder als Tränkmittel vorliegen, wobei das anwendungsfertige Mittel eine entsprechende Menge mindestens eines Verdünnungsmittels sowie ggf. weitere Verarbeitungs- und Zusatzstoffe enthält.

Die vorstehend beschriebenen Wirkstoffe werden erfindungsgemäß zum Schutz technischer Materialien, insbesondere von Holz und Holzwerkstoffen, eingesetzt, um diese vor Schädigung oder Zerstörung durch Schadorganismen, insbesondere Pilze und holzfressende Insekten zu bewahren. Im Rahmen dieser Verwendung wird das zu behandelnde Material, insbesondere Holz oder Holzwerkstoff, mit einer wirksamen Menge des erfindungsgemäßen Mittels behandelt.

Die Behandlung des zu schützenden Materials erfolgt dadurch, daß es nach bekannten Verfahren, wie beispielsweise Streichen, Spritzen, Sprühen oder unter Anwendung von Imprägnierverfahren, appliziert wird.

Dazu wird das zu behandelnde Material vorzugsweise mit einer Menge von 50 bis 1000 g, vorzugsweise 100 bis 500 g des erfindungsgemäß verwendeten Mittel pro m² Holzoberfläche behandelt. Bewährthabensichbeispielsweise bei der Verwendung von Bakteriensporen Sporenzahlen von 10⁶ bis 10¹⁰ Sporen/ml des Mittels und bei der Verwendung von Extrakten Extraktmengen von 0,5 bis 10 mg/ml. Im allgemeinen enthalten die erfindungsgemäß verwendeten Mittel in der zur Behandlung geeigneten Form die aktiven Komponenten in einer Menge von 0,05 bis 20 Gew.%.

Die erfindungsgemäß verwendeten Mittel werden zum vorbeugenden Schutz zur Bekämpfung von holzverfärbenden, -schädigenden und/oder zerstörenden Schadorganismen eingesetzt, insbesondere Pilzen, wobei insbesondere Basidiomyceten, wie beispielsweise Serpula lacrimans, Gloeophyllum spec., Poria spec., Lentinus spec., Donkiopora expansa, insbesondere Coniophora puteana, Poria placenta, Gloeophyllum trabeum und Coriolus versicolor zu nennen sind, sowie gegen andere holzzerstörende und/oder holzverfärbende Bläuepilze, wie beispielsweise Aureobasidium spec., Scleophoma spec., Ceratocystis spec., Cladosporium spec. sowie gegen Schimmelpilze, wie beispielsweise Chaetomium globosum, Glenospora graphii, Humicola grisea, Petriella setifera, Phialophora mutabilis und Trichurus spiralis.

Die erfindungsgemäß verwendeten Mittel eignen sich sowohl zur Bekämpfung eines akuten Befalls wie auch zum vorbeugenden Schutz vor Pilzen oder Insekten. Bei akutem Befall werden vorzugsweise die aktiven Bakterien oder ihre Stoffwechselprodukte eingesetzt, zum vorbeugenden Schutz vorzugsweise die Dauerformen ggf. in Verbindung mit den Stoffwechselprodukten.

Die Erfindung wird durch die nachfolgenden Beispiele näher erläutert.

### Beispiel 1

Die antifungale Wirkung von Bacillus subtilis - Stämmen und Streptomyces spp. gegen holzzerstörende Pilze erfolgte über eine Testung im "Strichtestverfahren" auf-Nähragarplatten, modifiziert nach Waksman (1952: Soil Microbiologie, Wiley, New York),angelehnt an die von Filippi et al. (1984: Plant and soil 80:119) beschriebene Testmethodik. Bewertet wird hierbei die Hemmzone (mm) zwischen aufgeimpftem Prüfpilz (holzzerstörende Pilze) und dem im Strich aufgeimpften Bakterium (Antagonist) nach einer Inkubation von ca. 10 Tagen bei 25°C.

Es sind die Ergebnisse von vier unterschiedlichen Antagonisten in Tabelle 3 dargestellt. Zwei Antagonisten gehören der Art Bacillus subtilis an (DSM 10272), zwei weitere der Gattung Streptomyces (DSM 8056, DSM 8057).

Prüfpilze waren Coriolus versicolor, Coniophora puteana, Serpula lachrimans und Pleurotus ostreatus.

**Tabelle 1:**

| Hemmwirkung (Hemmzone in mm) antagonistisch wirksamer Bakterienstämme gegen holzzerstörende Basisdiomyceten | | | | |
|---|---|---|---|---|
| **antagonistischer Bakterienstamm** | **Hemmzone (mm)** | | | |
| | C.versicolor | C.puteana | S.lachrimans | P.ostreatus |
| DSM 10272 | 15,3 | 24,0 | 28,3 | 20,8 |
| DSM 8056 | 2,2 | 25,2 | 27,0 | 15,5 |
| DSM 8057 | 3,2 | 17,7 | 29,2 | 20,8 |

### Beispiel 2

Vorbehandeltes Kiefernsplintholz wird unter Vakuum mit wässrigen Lösungen, die unterschiedliche Konzentrationen von Bakteriensporen enthalten, getränkt. Die Bakteriensporen wurden submers kultiviert. Vor ihrer Applikation wurden sie separiert und mit sterilem Leitungswasser entsprechend der in Tabelle 2 angegebenen Konzentration verdünnt.

Der Nachweis der antifungalen Wirksamkeit der eingesetzten Bakteriensporen erfolgte gemäß DIN 52176. Als Testpilze wurden Coniophora puteana und Poria placenta verwandt.

**Tabelle 2:**

| Wirkung von Bacillus subtilis DSM 10272 (FZB 41) gegen einen Angriff holzzerstörender Pilze im Testmodell mit Kiefernsplintholz - Hirnschnitten (Masseverlust in %). | | | |
|---|---|---|---|
| Testpilz | Konzentration (Sporen/ml) | Mittlerer Masseverlust getränkte Proben (%) | Mittlerer Masseverlust Kontrollproben (%) |
| Poria | 2*10⁸ | 14 | 46 |
| placenta | 2*10⁹ | 9 | 45 |
| | | | |
| Coniophora | 2*10⁸ | 21 | 52 |
| puteana | 2*10⁹ | 4 | 51 |

### Beispiel 3

Vorbehandeltes Kiefernsplintholz wurde unter Vakuum mit wässrigen Lösungen, die unterschiedliche Konzentrationen von Extrakt enthielten, getrennt. Die Extrakte stammten aus Fermentationsbrühen, die unter Verwendung des Stammes Bacillis subtilis DSM 10272 hergestellt wurden und auf übliche Weise aufgearbeitet wurden. Als Testpilze wurden Coniophora puteana, Gloephyllum trabeum und Poria placenta eingesetzt.

**Tabelle 3:**

| Wirkung von Extrakten aus Bacillus subtilis gegen holzzerstörende Pilze im Testmodell mit Kiefernsplintholz - Hirnschnitten (Masseverlust in %) | | | |
|---|---|---|---|
| Testpilz | Konzentration (mg/ml) | Mittlerer Masseverlust getränkte Proben (%) | Mittlerer Masseverlust Kontrollproben (%) |
| Poria | 1,5 | 0 | 47 |
| placenta | 0,75 | 8 | 48 |
| | | | |
| Coniophora | 1,5 | 6,7 | 29 |
| puteana | 0,75 | 19 | 57 |
| | | | |
| Gloephyllum | 1,5 | 0 | 24 |
| trabeum | 0,75 | 0 | 25 |

### Beispiele 4 bis 11

### Rahmenrezepturen

| 1. Imprägnierung LSM | |
|---|---|
| Alkydharz (z. B. Leinölalkyd) | 7 - 12 Gew.% |
| Shellsol AB | 2 - 3 Gew.% |
| Testbenzin K 60 | ad 100 Gew.% |

| 2. Grundierung LSM | |
|---|---|
| Alkydharz (z. B. Leinölalkyd) | 12 - 16 Gew.% |
| Shellsol AB | 2 - 3 Gew.% |
| Testbenzin K 60 | ad 100 Gew.% |

| 3. Lasur LSM | |
|---|---|
| Alkydharz (z. B. Sojaalkyd o. ä.) | 16 - 22 Gew.% |
| Shellsol AB | 2 - 3 Gew.% |
| Additive (Sicctiv, Antioxidant, Antiabsetzmittel | 1 - 2 Gew.% |
| Anorg./Org. Pigmente | 0,1 - 4 Gew.% |
| Testbenzin K 60 | ad 100 Gew.% |

| 4. Imprägnierung, wäßrig | |
|---|---|
| Selbstemulgierendes Alkydharz (Soja-Leinölalkyd o. ä.) | 7 - 12 Gew.% |
| Shellsol AB | 2 Gew.% |
| Wasser | ad 100 Gew.% |

| 5. Grundierungen, wäßrig | |
|---|---|
| Selbstemulgierendes Alkydharz | 8 - 12 Gew.% |
| Acrylatapolymer | 2 - 4 Gew.% |
| Shellsol AB | 2 Gew.% |
| Butylglykol | 3 - 4 Gew.% |
| Additive (Siccativ, Antiabsetzmittel, Antioxidant, pH-Stabilisator) | 2 Gew.% |
| Wasser | ad 100 Gew.% |

| 6. Lasuren, wäßrig | |
|---|---|
| Alkydharz/Acrylat-Hybrid | 16 - 22 Gew.% |
| Shellsol AB | 2 Gew.% |
| Additive (Siccativ, Antiabsetzmittel, Antioxidant, pH-Stabilisator) | 3 - 4 Gew.% |
| Anorg./Org. Pigmente | 0,1 - 4 Gew.% |
| Butylglykol | 4 Gew.% |
| Wasser | ad 100 Gew.% |

| 7. KD-Imprägniermittel | |
|---|---|
| Selbstemulgierendes Alkydharz | 30 Gew.% |
| Emulgator | 10 Gew.% |
| Butyldiglykol | 30 Gew.% |
| Wasser | ad 100 Gew.% |

### Anwendungskonzentration 1 : 9

Die vorstehenden Rahmenrezepturen wurden mit den nachstehend im einzelnen aufgeführten Wirkstoffen bzw. Wirkstoffkombinationen, jeweils gelöst oder suspendiert in einer der Lösungsmittelkomponenten, versetzt.

### Beispiel 4

Die Imprägnierung LSM aus der Rahmenrezeptur 1 wurde mit den folgenden Wirkstoffen versetzt:

| | |
|---|---|
| 0,1 Gew.% | des erfindungsgemäß verwendeten Funzigids, im vorliegenden Fall eine angereicherte 30% ige Extrakte (1:1) aus Fermentationsbrühen von DSM 10272 und Bacillus thuringiensis. |
| 0,05 Gew.% | Fenoxycarb |
| 10 Gew.% | quaternäres Ammoniumchlorid |

Es ergab sich eine leicht durch Tränken einzubringende Imprägnierung mit ausgezeichneter Wirkung gegen Holzbockbefall.

### Beispiel 5

Die Imprägnierung LSM aus der Rahmenrezeptur 1 wurde wie folgt mit Wirkstoffen versetzt:

| | |
|---|---|
| 0,05 Gew.% | des erfindungsgemäß verwendeten Fungizids, im vorliegenden Fall eine angereicherte 30% ige Extrakte (1:1) aus Fermentationsbrühen von Streptomyces flavescens DSM 8056 und Bacillus subtilis DSM 10272. |
| 0,01 Gew.% | Pyriproxyfen |
| 0,1 Gew.% | Tebufenozide |
| 0,5 Gew.% | Tebuconazole |

Es ergab sich eine Imprägnierung, die durch Tauchen oder Versprühen appliziert werden kann, und insbesondere für pilzgefährdete Holzkonstruktionen geeignet ist.

### Beispiel 6

Die Grundierung LSM der Rahmenrezeptur 2 wurde wie folgt modifiziert:

| | |
|---|---|
| 0,15 Gew.% | des erfindungsgemäß verwendeten Fungizids, im vorliegenden Fall eine angereicherte 30% ige Extrakte (1:1) aus Fermentationsbrühen von Streptomyces graminofaciens DSM 8055 und Bacillus subtilis DSM 10272. |
| 0,01 Gew.% | Pyriproxyfen |
| 0,7 Gew.% | Jodpropinylbutylcarbamat |

Die Grundierung kann vorteilhaft zur Behandlung von zu beschichtenden Holzflächen eingesetzt werden.

### Beispiel 7

Die wässrige Imprägnierung aus der Rahmenrezeptur 4 wurde mit der folgenden Wirkstoffkombination versetzt:

| | |
|---|---|
| 0,1 Gew.% | des erfindungsgemäß verwendeten Fungizids, im vorliegenden Fall eine angereicherte 40% ige Extrakte aus Fermentationsbrühen von Bacillus subtilis DSM 10272 in Mischung mit 10⁷ Sporen von Bacillus thuringiensis. |
| 0,05 Gew.% | Permethrin |
| 5 Gew.% | quaternäres Ammoniumchlorid |

Es wurde eine sprüh- und streichfähige wässrige Imprägnierung mit einem ausgezeichneten Schutz gegen akuten Schadinsektenbefall erhalten, die durch Versprühen oder Streichen auf bestehende Holzkonstruktionen aufgebracht werden kann.

### Beispiel 8

Beispiel 7 wurde mit der wässrigen Grundierung gemäß Rahmenrezeptur 5 wiederholt. Die wässrige Grundierung konnte durch Aufstreichen appliziert werden und bot einen guten Haftgrund für weitere Anstriche.

### Beispiel 9

Die wässrige Lasur gemäß Rahmenrezeptur 6 wurde mit der folgenden Wirkstoffkombination versetzt:

| | |
|---|---|
| 0,1 Gew.% | des erfindungsgemäß verwendeten Fungizids, im vorliegenden Fall eine angereicherte 30% ige Extrakte aus Fermentationsbrühen von Bacillus subtilis DSM 10272 in kombination mit 10⁷ Sporen von Streptomyces avermitillis. |
| 0,01 Gew.% | Pyriproxyfen |
| 0,01 Gew.% | RH-0345 |
| 0,2 Gew.% | Propiconazole |
| 0,2 Gew.% | Tebuconazole |

Das Mittel eignet sich ausgezeichnet als Holzschutzlasur für bestehende, zu schützende Einrichtungen.

### Beispiel 10

Die gleiche wässrige Lasur in Beispiel 9 wurde unter Verwendung von Nuarimol als Fungizid anstelle von Propiconazol hergestellt.

### Beispiel 11

Ein Holzschutzmittel für die Kesseldruckimprägnierung von Bauholz wurde mit der Rahmenrezeptur 7 wie folgt mit Wirkstoff versetzt:

| | |
|---|---|
| 0,1 Gew.% | des erfindungsgemäß verwendeten Fungizids, im vorliegenden Fall eine angereicherte 40% ige Extrakte aus Fermentationsbrühen von Bacillus subtilis DSM 10272 in Mischung (1:1) mit angereichertem 30% igem Extrakt aus Fermentationsbrühen von Streptomyces murnius DSM 8057. |
| 0,05 Gew.% | Fenoxycarb |
| 0,05 Gew.% | Tebufenozide |
| 10 Gew.% | quaternäre Ammoniumverbindung |

Das Imprägniermittel ist nach der Verdünnung im Verhältnis 1 : 9 einsatzfähig und besonders für die dauerhafte Imprägnierung von Bauholz geeignet.

## Patentansprüche

1. Verwendung eines Mittels zum Schutz von technischen Materialien aus Holz und von Holzwerkstoffen vor Schädigung und Zerstörung durch Schadorganismen auf der Basis natürlicher Wirkstoffe, **dadurch gekennzeichnet, dass** das Mittel einen Gehalt an mindestens einem der natürlichen Wirkstoffe Cysten, Sporen und Stoffwechselprodukte der nachstehenden Mikroorganismen gegen holzzerstörende Schadorganismen aufweist, wobei die Mikroorganismen ausgewählt sind aus der Gruppe bestehend aus:
Streptomyces spp. DSM 7922;
Streptomyces flavescens DSM 8056;
Streptomyces graminofaciens DSM 8055;
Streptomyces murnius DSM 8057;
Bacillus subtilis DSM 10272.

2. Verwendung nach Anspruch 1, **dadurch gekennzeichnet, dass** das Mittel ein Trägermaterial aufweist und den Wirkstoff in einer Menge von 0,01 bis 99,5 Gew.-% enthält.

3. Verwendung nach Anspruch 2, **dadurch gekennzeichnet, dass** das Mittel den Wirkstoff in einer Menge von 0,05 bis 20 Gew.-% enthält.

4. Verwendung nach einem der vorhergehenden Ansprüche, **dadurch gekennzeichnet, dass** das Mittel als Wirkstoff Streptomyces avermitillis und/oder Bacillus thuringiensis var. israilensis enthält und zusätzlich ein weiteres Fungizid und/oder Insektizid enthalten ist.

5. Verwendung nach Anspruch 4, **dadurch gekennzeichnet, dass** das Insektizid ein Insektenhormon, dessen Mimetikum oder Analogon ist.

6. Verwendung nach Anspruch 5, **dadurch gekennzeichnet, dass** das Mittel ein Insektenjuvenilhormonanalogon in einer Menge von 0,00005 bis 0,5 Gew.-%, bezogen auf die gesamte Formulierung, enthält.

7. Verwendung nach einem der vorhergehenden Ansprüche, **dadurch gekennzeichnet, dass** das Mittel in Form einer wässrigen Lösung oder Suspension vorliegt.

8. Verwendung nach einem der vorhergehenden Ansprüche, **dadurch gekennzeichnet, dass** das Mittel in Form einer Lösung oder Suspension der Mikroorganismen, ihrer Cysten oder Sporen und/oder ihrer Stoffwechselprodukte auf den zu schützenden Gegenstand appliziert wird.

## Claims

1. Use of an agent for protecting engineering materials made of wood and derived timber products against damage and destruction by harmful organisms, said agent being based on natural active substances, **characterised in that** the agent has a content of at least one of the natural active substances constituted by cysts, spores and metabolic products of the micro-organisms listed below acting against wood-destroying harmful organisms, said micro-organisms being selected from the group consisting of:
Streptomyces spp. DSM 7922;
Streptomyces flavescens DSM 8056;
Streptomyces graminofaciens DSM 8055;
Streptomyces murnius DSM 8057;
Bacillus subtilis DSM 10272.

2. Use according to Claim 1, **characterised in that** the agent comprises a carrier material and contains the active substance in a quantity from 0.01 wt.% to 99.5 wt.%.

3. Use according to Claim 2, **characterised in that** the agent contains the active substance in a quantity from 0.05 wt.% to 20 wt.%.

4. Use according to one of the preceding claims, **characterised in that** the agent contains Streptomyces avermitillis and/or Bacillus thuringiensis var. israilensis by way of active substance and additionally a further fungicide and/or insecticide is included.

5. Use according to Claim 4, **characterised in that** the insecticide is an insect hormone, a mimetic thereof or analogue thereof.

6. Use according to Claim 5, **characterised in that** the agent contains an insect juvenile-hormone analogue in a quantity from 0.00005 wt.% to 0.5 wt.%, relative to the overall formulation.

7. Use according to one of the preceding claims, **characterised in that** the agent is present in the form of an aqueous solution or suspension.

8. Use according to one of the preceding claims, **characterised in that** the agent is applied onto the object to be protected in the form of a solution or suspension of the micro-organisms, their cysts or spores and/or their metabolic products.

## Revendications

1. Utilisation d'un agent pour protéger les matériaux techniques en bois et les matériaux dérivés du bois contre les dégâts et la détérioration occasionnés par des organismes nuisibles à base de substances actives naturelles, **caractérisée en ce que** l'agent présente une teneur en au moins l'une des substances actives naturelles cystes, spores et produits de régénération des tissus des micro-organismes ci-après contre les organismes nuisibles xylophages, les micro-organismes étant choisis parmi le groupe constitué de :
Streptomyces spp. DSM 7922 ;
Streptomyces flavescens DSM 8056 ;
Streptomyces graminofasciens DSM 8055 ;
Streptomyces murnius DSM 8057 ;
Bacillus subtilis DSM 10272.

2. Utilisation selon la revendication 1, **caractérisée en ce que** l'agent présente un matériau support et contient la substance active en une quantité allant de 0,01 à 99,5 % en poids.

3. Utilisation selon la revendication 2, **caractérisée en ce que** l'agent contient la substance active en une quantité allant de 0,05 à 20 % en poids.

4. Utilisation selon l'une des revendications précédentes, **caractérisée en ce que** l'agent contient comme substance active Streptomyces avermitillis et/ou Bacillus thuringiensis var. israilensis et que, en outre, un autre fongicide et/ou insecticide est présent.

5. Utilisation selon la revendication 4, **caractérisée en ce que** l'insecticide est une hormone d'insecte, son homologue ou analogue.

6. Utilisation selon la revendication 5, **caractérisée en ce que** l'agent contient un analogue d'hormone juvénile d'insecte en une quantité allant de 0,00005 à 0,5 % en poids sur la formulation totale.

7. Utilisation selon l'une des revendications précédentes, **caractérisée en ce que** l'agent se présente sous forme d'une solution ou suspension aqueuse.

8. Utilisation selon l'une des revendications précédentes, **caractérisée en ce que** l'agent est appliqué sous forme d'une solution ou suspension de micro-organismes, de leurs cystes ou spores et/ou de leurs produits de régénération des tissus sur l'objet à protéger.
